# EUROPEAN PATENT APPLICATION

(11) **EP 2 533 235 A1**
(43) Date of publication of application: **12.12.2012**
(21) Application number: 12153351.7
(22) Date of filing: 31.01.2012
(51) Int. Cl.: G09G 5/08, G09G 5/14

(54) **Display apparatus, control method of the same and image processing apparatus thereof**

(30) Priority: 07.06.2011 KR 20110054716
(71) Applicant: Samsung Electronics Co., Ltd., Suwon-si, Gyeonggi-do, 443-742 (KR)
(72) Inventor: Kim, Jung-dae, Seoul (KR)
(74) Representative: Bruce, Alexander Richard Henry

(57) **Abstract**

Disclosed is a display apparatus including: an image processor which processes a first video signal and a second video signal respectively received from a first image processing apparatus and a second image processing apparatus that are operated by a single input device to be displayable; a display unit which displays a first image based on the first video signal and a second image based on the second video signal processed by the image processor; and a controller which controls location information of a pointer included in one of the first image and the second image and moving depending on a user's manipulation input through the input device to be transmitted to one of the first image processing apparatus and the second image processing apparatus.

## Description

The present invention relates to a display apparatus, a control method of the same and an image processing apparatus thereof, and more particularly to a display apparatus that displays an image input from a plurality of image processing apparatuses, a control method of the same and the image processing apparatus thereof.

A display apparatus such as a monitor, a television, etc. displays an image based on an input video signal. The video signal may be output from an image processing apparatus such as a computer or the like. The display apparatus can display images based on video signals received from a plurality of image processing apparatuses through one screen, for example in the case where one user uses the plurality of image processing apparatuses at the same time.

In this case, the plurality of image processing apparatuses operate in response to a user's input through an input device such as a wired mouse, a wireless mouse, a wired keyboard, a wireless keyboard, a wireless pointing device, etc. The input device may be prepared corresponding to the number of image processing apparatuses, but a single input device may be employed taking convenience into account in the case of one user. If an image from a single input device is used, a pointer of the input device moves between images corresponding to the respective image processing apparatuses in response to a user's control.

However, if a user's convenience is considered, while the pointer moves between the plural images, the movement of the pointer should be continuous at boundaries between the plurality of images.

Accordingly, one or more exemplary embodiments provide a display apparatus that displays images from a plurality of image processing apparatuses and a control method of the same, which can maintain a continuity in a movement of a pointer at boundaries between plural images.

One or more exemplary embodiments also provide an image processing apparatus, which can maintain a continuity in a movement of a pointer at boundaries between plural images displayed on a display apparatus, based on video signals provided from the plural image processing apparatuses.

According to an aspect of an exemplary embodiment, a display apparatus includes: an image processor which processes a first video signal and a second video signal respectively received from a first image processing apparatus and a second image processing apparatus that are operated by a single input device to be displayable; a display unit which displays a first image based on the first video signal and a second image based on the second video signal processed by the image processor; and a controller which controls location information of a pointer included in one of the first image and the second image and moving depending on a user's manipulation input through the input device to be transmitted to one of the first image processing apparatus and the second image processing apparatus.

The controller may receive the location information of the pointer from one of the first image processing apparatus and the second image processing apparatus.

The controller may control resolution information about one of the first image and the second image, where the pointer is located, to be transmitted to one of the first image processing apparatus and the second image processing apparatus.

The controller may receive the resolution information from one of the first image processing apparatus and the second image processing apparatus.

The controller may transform the location information of the pointer, to be transmitted to one of the first image processing apparatus and the second image processing apparatus, on the basis of the resolution information of the first and second images.

The controller may transmit the location information of the pointer to one of the first image processing apparatus and the second image processing apparatus if the pointer moves between the first image and the second image.

The display apparatus may further include a switching unit which switches an input signal of the input device to be input to one of the first image processing apparatus and the second image processing apparatus, wherein the controller controls the switching unit to switch the input signal between the first image processing apparatus and the second image processing apparatus if the pointer moves between the first image and the second image.

The input device may include at least one of a wired mouse, a wireless mouse, a wired keyboard, a wireless keyboard, and a wireless pointing device.

According to an aspect of another exemplary embodiment, a method of controlling a display apparatus includes: displaying a first image and a second image based on a first video signal and a second video signal respectively received from a first image processing apparatus and a second image processing apparatus that are operated by a single input device; and transmitting location information of a pointer included in one of the first image and the second image and moving depending on a user's manipulation input through the input device to one of the first image processing apparatus and the second image processing apparatus.

The method may further include receiving the location information of the pointer from one of the first image processing apparatus and the second image processing apparatus.

The method may further include transmitting resolution information about one of the first image and the second image, where the pointer is located, to one of the first image processing apparatus and the second image processing apparatus.

The method may further include receiving the resolution information about one of the first image and the second image from one of the first image processing apparatus and the second image processing apparatus.

The method may further include transforming the location information of the pointer, to be transmitted to one of the first image processing apparatus and the second image processing apparatus, on the basis of the resolution information of the first and second images.

The receiving and the transmitting may be performed if the pointer moves between the first image and the second image.

The method may further include switching an input signal of the input device between the first image processing apparatus and the second image processing apparatus.

The input device may include at least one of a wired mouse, a wireless mouse, a wired keyboard, a wireless keyboard, and a wireless pointing device.

According to an aspect of another exemplary embodiment, an image processing apparatus includes: an image processor which processes a video signal to be transmitted to a display apparatus; a communication unit which receives a user's input from an input device connected together to a different image processing apparatus; and a controller which controls a pointer to be displayed and moved on an image based on the video signal in accordance with a user's input and transmits location information of a pointer to the different image processing apparatus if the pointer moves beyond a boundary of the image.

The controller may transmit resolution information of the image along with the location information of the pointer.

The user's input from the input device may be selectively input to one of the image processing apparatus and the different image processing apparatus connected to the input device in accordance with location of the pointer.

The input device may include at least one of a wired mouse, a wireless mouse, a wired keyboard, a wireless keyboard, and a wireless pointing device.

According to an aspect of another exemplary embodiment, an image processing apparatus includes: an image processor which processes a video signal to be transmitted to a display apparatus; a communication unit which receives a user's input from an input device connected together to a different image processing apparatus; and a controller which receives location information of a pointer from the display apparatus, and controls the pointer to be displayed starting at a boundary of an image corresponding to the video signal on the basis of the location information of the pointer and to move in accordance with the user's input.

Resolution information of an image may be further received from the different image processing apparatus connected together, and the location information of the pointer is transformed on the basis of the received image's resolution information and its own image's resolution information.

The user's input from the input device may be selectively input to one of the image processing apparatus and the different image processing apparatus connected to the input device in accordance with location of the pointer.

The input device may include at least one of a wired mouse, a wireless mouse, a wired keyboard, a wireless keyboard, and a wireless pointing device.

The above and/or other aspects will become apparent and more readily appreciated from the following description of the exemplary embodiments, taken in conjunction with the accompanying drawings, in which:
FIG. 1 is a control block diagram of a display apparatus according to an exemplary embodiment;
FIG. 2 illustrates a screen in the case of moving a pointer displayed by the display apparatus of FIG. 1;
FIG. 3 illustrates a screen in the case of determining coordinates of a pointer in accordance with resolutions of first and second images in a boundary between the first and second images displayed by the display apparatus of FIG. 1;
FIG. 4 shows an example of a control flowchart for the display apparatus of FIG. i;
FIG. 5 shows another example of a control flowchart for the display apparatus of FIG. 1; and
FIG. 6 shows a control block diagram of an image processing apparatus according to an exemplary embodiment.

Below, exemplary embodiments will be described in detail with reference to accompanying drawings so as to be easily realized by a person having ordinary knowledge in the art. The exemplary embodiments may be embodied in various forms without being limited to the specific descriptions set forth herein. Descriptions of well-known parts are omitted for clarity, and like reference numerals refer to like elements throughout.

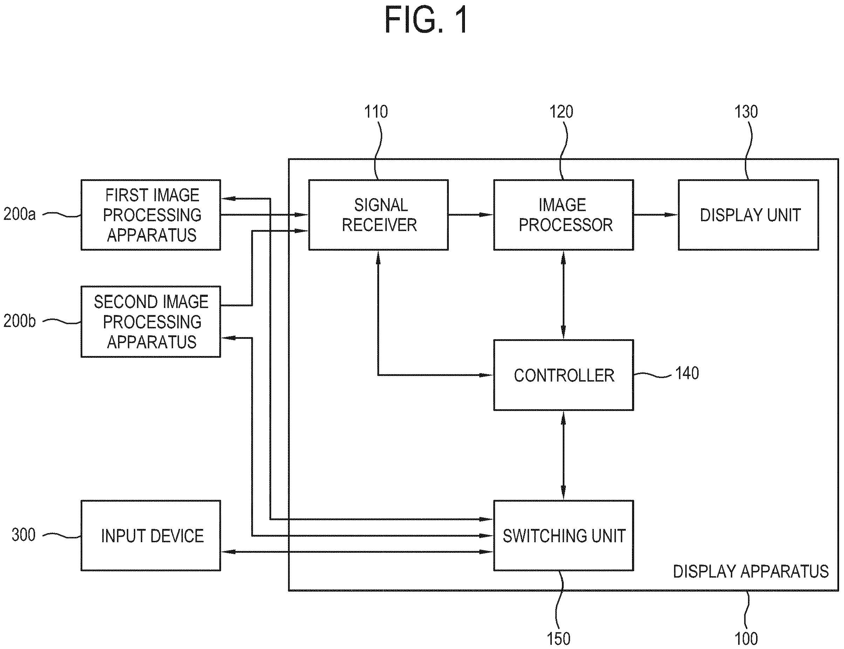

FIG. 1 is a control block diagram of a display apparatus 100 according to an exemplary embodiment.

The display apparatus 100 in this exemplary embodiment includes a signal receiver 110, an image processor 120, a display unit 130, a controller 140, and a switching unit 150. The display apparatus 100 may be connected with two or more image processing apparatuses 200a and 200b, and the display apparatus 100 may be a monitor or a TV.

The image processing apparatus may be a computer, a notebook computer, or the like. Hereinafter, two image processing apparatuses will be described as an example of a plurality of image processing apparatuses, and are called a first image processing apparatus and a second image processing apparatus, respectively. In this exemplary embodiment, two image processing apparatuses are described by way of example, but the number of image processing apparatuses is not limited to two, and may be three or more.

The signal receiver 110 is connected to the first image processing apparatus and the second image processing apparatus wirelessly or via one or more wires, and receives a video signal from each image processing apparatus (hereinafter, video signals output from the first and second image processing apparatuses will be called a first video signal and a second video signal, respectively) and transmits it to the image processor 120. The image processor 120 receives the first and second video signals from the first and second image processing apparatuses, respectively, and converts them into formats displayable by the display unit 130, thereby outputting the converted first and second video signals to the display unit 130.

The display unit 130 displays a first image based on the first video signal and a second image based on the second video signal, which are processed by the image processor 120. That is, the display unit 130 displays the first image and the second image on one screen at the same time. The first image and the second image may be simultaneously displayed by various methods. For example, the first image and the second image may be displayed to left and right sides of the display or top and bottom sides, in parallel with each other. Also, the first image and the second image may be displayed so as to not overlap with each other, or so as to overlap at least partially with each other. In this exemplary embodiment, the first and second images are displayed, but the number of displayed images are not be limited to two.

Alternatively, three or more images may be displayed in accordance with the number of connected image processing apparatuses.

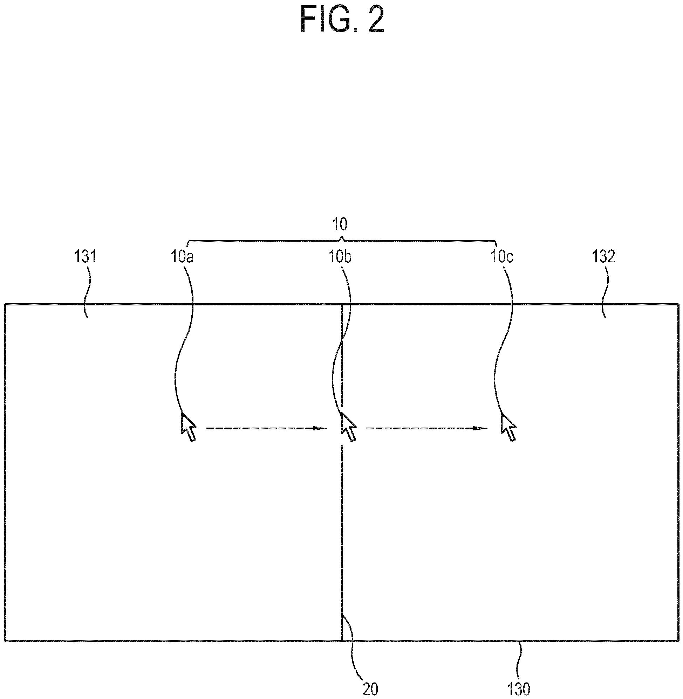

The first and second image processing apparatuses may operate in accordance with a user's instruction (hereinafter, referred to as an "input signal") input through an input device 300. For example, the input device may include a wired mouse, a wireless mouse, a wired keyboard, a wireless pointing device, etc. A pointer is also displayed (see FIG. 2), and moves depending on a user's manipulation input through the input device 300. The pointer moves as a user moves the input device 300 and thus moves between the first image and the second image.

The switching unit 150 switches so that the input signal of the input device 300 is input to one of the first and second image processing apparatuses under control of the controller 140. The switching unit 150 may be connected to the input device 300 via a universal serial bus (USB) hub by way of example. If the pointer is located on the first image, the input device 300 is connected to the first image processing apparatus. On the other hand, if the pointer is located on the second image, the input device 300 is connected to the second image processing apparatus.

The controller 140 controls the switching unit 150 to switch the input of the input signal from one of the first and second image processing apparatuses to the other when the input signal needs switching, i.e., when the pointer moves between the first image and the second image.

Whether the pointer passes a boundary between the first image and the second image may be determined by the controller 140, or may be determined by the one of the first and second image processing apparatuses which is providing the image on which the pointer is currently located, thereby informing the controller 14 of a determination result. The first or second image processing apparatus may send the display apparatus 100 a certain command containing information about the location of the pointer through a display data channel/command interface (DDC/CI) by way of example. Besides the DDC/CI, a high definition multimedia interface - consumer electronics control (HDMI-CEC) or like various methods may be used.

If the first and second image processing apparatus are initially driven, the pointer may appear at a location previously set up by a user or at a location dependent on when each image processing apparatus was turned on.

The controller 140 controls location information of the pointer with respect to one of the first and second image processing apparatuses when the input signal is switched, i.e., when the pointer moves between the images. In this case, the controller 140 receives the location information of the pointer from one of the first and second image processing apparatuses and transmits the received location information to the other image processing apparatus. The location information of the pointer includes information about coordinates at which the pointer is located within the image.

In addition, the controller 140 may also receive and/or transmit information about resolution of an image where the pointer is located (hereinafter, "resolution information"). The resolution of the image corresponds to resolution of a video signal output from each image processing apparatus, and each image processing apparatus may have its own resolution. When the display apparatus 100 displays each image, the resolution of each image may be changed.

A method of transmitting the location information of the pointer and the resolution information of the image from the display apparatus 100 to the image processing apparatus may vary. For example, a method of allowing the image processing apparatus to take corresponding information as the display apparatus 100 toggles a digital visual interactive (DVI) hot-plug pin connecting with the image processing apparatus, a method of transmitting the corresponding information by polling (regarding the image processing apparatus as a master and the display apparatus as a slave), etc.

FIG. 2 illustrates a screen in the case of moving a pointer 10a, 10b, 10c displayed by the display apparatus of FIG. 1.

A first image 131 is based on a first video signal output from the first image processing apparatus, and a second image 132 is based on a second video signal output from the second image processing apparatus.

In FIG. 2, the first image 131 and the second image 132 are displayed on the left and right of the display unit 130, respectively, but the arrangement of the first and second images is not limited thereto. Alternatively, the first image and the second image may be displayed on the top and bottom of the display unit, or may be displayed in a form in which at least a part of the second image overlaps with the first image, such as in the case of a picture in picture (PIP) image. Also, in FIG. 2, the first image 131 and the second image 132 are divided at a ratio of 1:1. However, two images may have not the same size, but different sizes.

If the pointer is located on the first image 131 (10a), the input signal from the input device 300 is transmitted to the first image processing apparatus through the switching unit 150, and is not be transmitted to the second image processing apparatus. Also, if the pointer is located on the first image 131 (10a), the first image processing apparatus may monitor the location information of the pointer.

There is a boundary 20 between the first image 131 and the second image 132, and the boundary 20 may be designated by a user or may be determined on the basis of the resolution information of the first and second images 131 and 132.

If a user uses the input device 300 to move the pointer being located on the first image 131, and the pointer reaches the boundary 20 (10b), the controller 140 receives the location information of the pointer from the first image processing apparatus, and transmits the location information of the pointer and the resolution information of the first image 131 to the image processing apparatus generating the adjoining image, i.e. the second image processing apparatus. At this time, the controller 140 may receive the resolution information of the first image 131 along with the location information of the pointer, and transmit it to the second image processing apparatus.

In the foregoing exemplary embodiment, the pointer moves from the first image 131 to the second image 132, but it is not limited thereto. Alternatively, the pointer may move from the second image 132 to the first image 131.

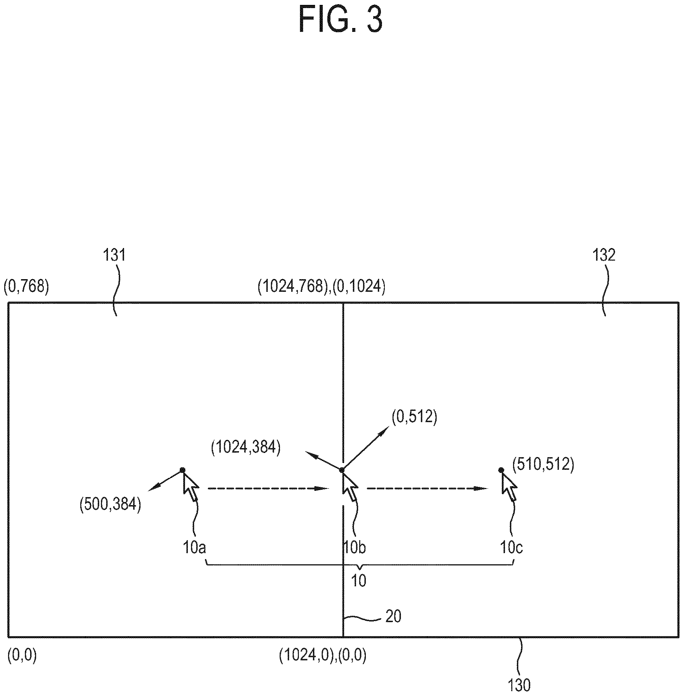

FIG. 3 illustrates a screen in the case of determining coordinates of a pointer 10a, 10b, 10c, in accordance with resolutions of first and second images 131 and 132, at a boundary 20 between the first and second images 131 and 132 displayed by the display apparatus of FIG. 1.

The first image 131 and the second image 132 have their own resolutions, respectively. The resolutions of the first and second images 131 and 132 may be equal to or different from each other. In this exemplary embodiment, the first image 131 has a resolution of 1024*768, and the second image 132 has a resolution of 1280*1024. Further, the coordinates of the pointer will be represented by (x, y) with respect to the vertical and horizontal axes of the display unit 130.

If the first image 131 has a resolution of 1024*768, x and y coordinates at which the pointer 10 can be located within the first image range from 0 to 1024 and from 0 to 768, respectively. If the second image 132 has a resolution of 1280*1024, x and y coordinates at which the pointer 10 can be located within the second image range from 0 to 1280 and from 0 to 1024, respectively.

The boundary 20 between the first image 131 and the second image 132 is a place where the first image 131 and the second image 132 come in contact with each other, and thus can be described with respect to both the coordinates of the first image 131 and the coordinates of the second image 132. That is, the coordinates of the boundary 20 are (1024, y) with regard to the first image 131 and (o, y) with regard to the second image 132. As described above, the controller 140 can determine the boundary on the basis of the resolutions of the first and second images 131 and 132.

For example, the pointer, which is located at coordinates (500, 384) on the first image 131 (10a), is moved by a user using the input device 300 to reach the boundary 20 (10b). If it is assumed that the pointer moves in parallel with the x axis, the pointer 10b at the boundary 20 has a coordinates (1024, 384) on the first image.

If the coordinates of the pointer are (1024, 384) on the first image, i.e., if the pointer reaches the boundary (10b), the controller 140 of the display apparatus 100 receives information about the coordinates (1024, 384) of the pointer from the first image processing apparatus, and transmits the information to the second image processing apparatus. In this case, the controller 140 may also send the second image processing apparatus information about the resolution of 1024*768 the first image 131 has.

The controller 140 may transform the location information about the pointer to be transmitted to the second image processing apparatus and then transmit it to the second image processing apparatus on the basis of the location information of the pointer 10b and the resolution information of the first and second images 131 and 132.

Below, it will be described that the controller 140 transforms the coordinates of the pointer to coordinates of the second image 132 on the basis of the above information.

The controller 140 transforms the coordinates of the pointer by scaling, with respect to a boundary axis ratio, i.e. a y-axis ratio, the resolution of the first image 131 to the resolution of the second image 132. For example, FIG. 3 shows that the y-axis resolution ratio of the first image 131 to the second image 132 is 768:1024, i.e., 3:4. If the pointer on the first image 131 has coordinates (1024, 384), the coordinates of the pointer in the boundary 20 has a y-axis coordinate of 384 in the first image 131. Thus, the y-axis coordinate of the pointer on the second image 132 is 512 since 3:4 = 384:y. Therefore, the coordinates (1024, 384) the pointer on the first image 131 can be transformed into coordinates (o, 512) on the second image 132.

The coordinates of the pointer on the second image can be calculated and determined as above even if the pointer is located at another place in the boundary 20, and of course even if the resolution of the first image and/or the resolution of the second image are different from the above resolutions. The present invention is not limited to the example resolution, co-ordinates or boundary axis described above.

If the controller 140 transforms the coordinates on the first image 131 into the coordinates on the second image 132 in accordance with a ratio of the resolution of the first image 131 to the resolution of the second image 132, it may result that the y-axis coordinate is not an integer. For example, if the first image has a resolution of 1024*768, the second image has a resolution of 1280*1024 and the pointer in the boundary 20 has a y-axis coordinate of 300 on the first image, the y-axis coordinates is calculated as 533.333 since 3:4 = 400:y. In this case, the controller 140 rounds off the calculated y-axis coordinate to 533 and determines it as the y-axis coordinate on the second image.

The following table 1 shows an example of coordinates of the pointer on the second image 132, transformed in accordance with the resolutions of the first and second images 131 and 132 and the coordinates of the pointer on the first image 131 at the boundary 20.

**Table:**

| Resolutions of first and second images | y-axis ratio of resolutions | Coordinates of pointer on first image in boundary | Coordinates of pointer on second image in boundary |
|---|---|---|---|
| | 3:4 | (1024,0) | (0,0) |
| 1024*768 / | | (1024,384) | (0,512) |
| 1280*1024 | | (1024,400) | (0,533) |
| | | (1024,768) | (0.1024) |
| 1152*864 / | 6:5 | (1152,0) | (0,0) |
| 1280*720 | | (1152,256) | (0,213) |
| | | (1152,432) | (0,360) |
| | | (1152,710) | (0,592) |
| | | (1152,864) | (0,720) |

The controller 140 sends the second image processing apparatus the coordinates (0, 512) of the pointer on the second image 132 determined as above. The second image processing apparatus, which receives the transformed location information of the pointer, moves the pointer starting from the coordinates (o, 512) within the second image 132 if a user moves the pointer through the input device 300, and monitors the location of the pointer on the second image 132.

Accordingly, to the user, the pointer appears to move without discontinuity while the pointer moves between the first image 131 and the second image 132. This is the same even if the resolutions of the first image 131 and the second image 132 are different.

If the pointer passes by the boundary 20 between the first image 131 and the second image 132 and moves to the second image 132, the switching unit 150 switches the input signals between the first image processing apparatus and the second image processing apparatus under control of the controller 140, so that the first image processing apparatus will stop receiving the input signal and only the second image processing apparatus will receive the input signal even if a user inputs the input signal by clicking or the like the input device 300.

Thus, the above-described exemplary embodiment makes it more convenient for a user to control the pointer 10a, 10b, 10c to move between the first image 131 and the second image 132 through the input device 300 so that only a certain image processing apparatus can receive the input signal.

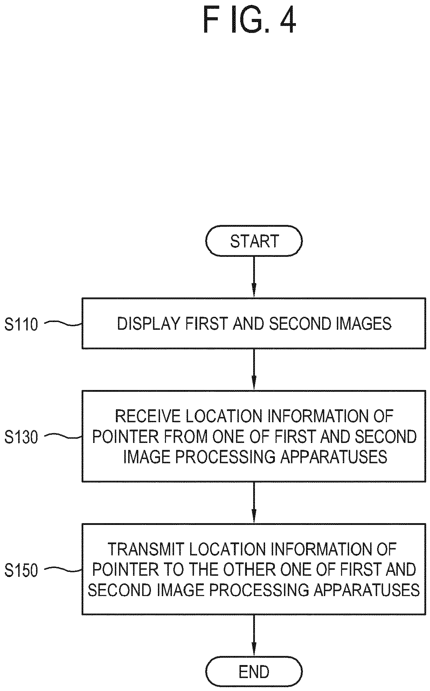

FIG. 4 shows an example of a control flowchart for the display apparatus 100 of FIG. 1_{.}

The display apparatus 100 is connected to the first and second image processing apparatuses that can be controlled by a single input device 300. The display apparatus displays a first image based on a video signal output from the first image processing apparatus and a second image based on a video signal output from the second image processing apparatus (S110).

The pointer moving in response to a user's manipulation input using the input device 300 may be located on either the first image or the second image. If the pointer is located on the first image, the first image processing apparatus monitors the location of the pointer. On the other hand, if the pointer is located on the second image, the second image processing apparatus monitors the location of the pointer.

The display apparatus 100 transmits the location information of the pointer to one of the first image processing apparatus and the second image processing apparatus while the pointer moves between the first image and the second image (S150). At this time, the display apparatus 100 receives the location information about the pointer from one of the first and second image processing apparatuses and transmit it to the other one (S130).

Here, the input device 300 may include a wired mouse, a wireless mouse, a wired keyboard, a wireless keyboard, a wireless pointing device, etc.

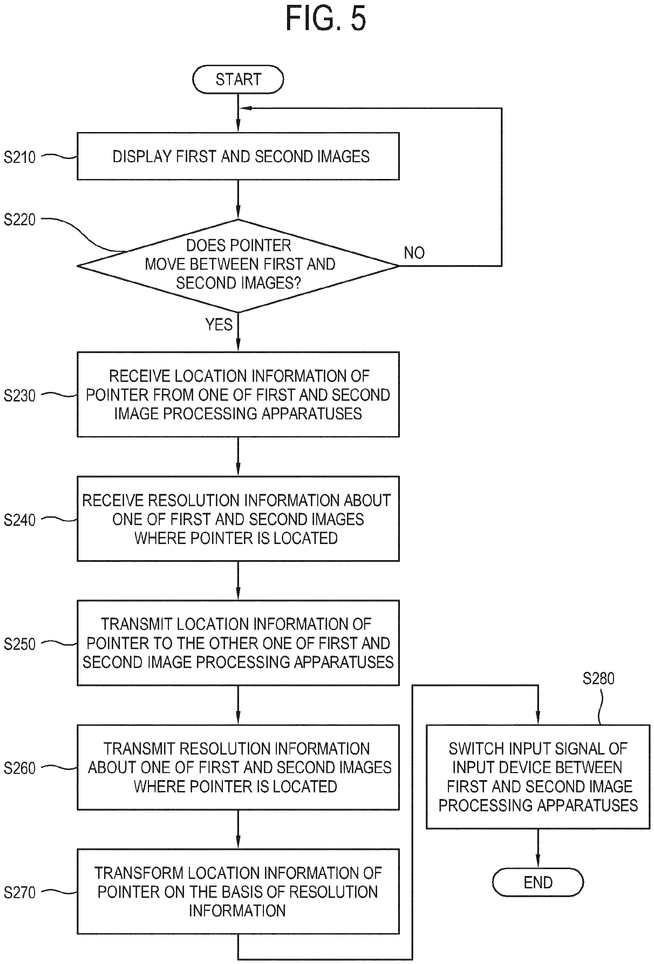

FIG. 5 shows another example of a control flowchart for the display apparatus of FIG. 1.

The display apparatus 100 displays a first image based on a video signal output from a first image processing apparatus 200a and a second image based on a video signal output from a second image processing apparatus 200b (S210), in which the pointer 10 is included in one of the displayed first and second images.

The display apparatus 100 determines whether the pointer 10 moves between the first image 131 and the second image 132 (S220), and receives the location information of the pointer from one of the first and second image processing apparatuses 200a and 200b when the pointer 10 moves between the first image 131 and the second image 132 (S230). In this case, the resolution information of the image where the pointer 10 is located may be possessed by the display apparatus 100 since it is included in the first image or the second image, or may be received together with the location information of the pointer (S240).

Next, the received location information of the pointer is transmitted to the other one of the first image processing apparatus 200a and the second image processing apparatus 200b (S250). In this case, the resolution information of one of the first and second images including the pointer may also be transmitted together with the location information (S260).

The display apparatus 100 transforms the location information of the pointer 10 to be transmitted to the other one of the first and second image processing apparatuses 200a and 200b on the basis of the resolution information of the first and second images (S270). The operations of transforming the location information of the pointer are the same as described with reference to FIG. 3.

Through the above process, it appears to a user that the pointer is moving continuously even though the pointer moves between the first image and the second image.

In this case, the input signal of the input device 300 is switched between the first image processing apparatus 200a and the second image processing apparatus 200b (S280). As the input signal is switched, a user's input signal using the input device 300 is input to only the image processing apparatus corresponding to the image where the pointer is located.

Thus, it is more convenient for a user to control the pointer to move between the first image and the second image through the input device 300 so that only a certain image processing apparatus receives the input signal.

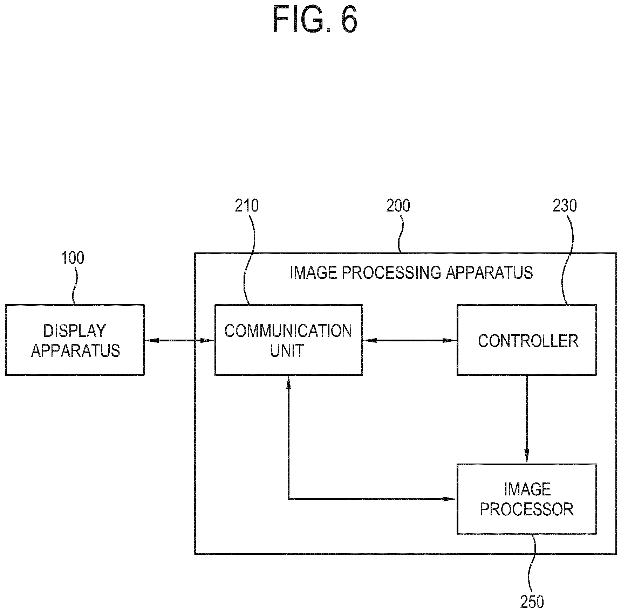

FIG. 6 shows a control block diagram of an image processing apparatus 200 according to an exemplary embodiment.

In this exemplary embodiment, the image processing apparatus 200 includes a communication unit 210, a controller 230, and an image processor 250. The image processing apparatus is connected to the display apparatus 100 wirelessly or via one or more wires and transmits a video signal to the display apparatus 100. The display apparatus 100 is connected with two or more image processing apparatuses. If two or more image processing apparatuses are connected to one display apparatus 100, two or more images are simultaneously displayed in the display apparatus 100. One or more of the image processing apparatuses may be a computer, or the like.

The communication unit 210 receives a user's input signal from the input device 300 connected together with other image processing apparatuses. A user's input signal includes information about movement of the pointer. Also, the communication unit 210 is connected to the display apparatus 100 and transmits and receives the location and resolution information of the pointer from other image processing apparatuses connected to the display apparatus 100.

The image processor 250 processes a video signal to be transmitted to the display apparatus 100, and the video signal may contain the resolution information.

The controller 230 controls the pointer to be displayed and moved on the image to be displayed in the display apparatus 100 in response to a user's input signal, which may be achieved via an application program or a driver.

The controller 230 monitors the location of the pointer if the pointer is located on the image corresponding to the current image processing apparatus. The location of the pointer is based on the resolution information of the image, and calculated into coordinates. For example, if the resolution is 1024*768, the coordinates of the pointer can be represented by (x, y), where 0≤x≤1024, 0≤y≤768, and x and y are integers.

Below, an operation of the controller 230 in the image processing apparatus 200 corresponding to the image where the pointer is currently located will be described.

The controller 230 controls the pointer 10 to be displayed and moved on the image based on the video signal in response to a user's input. If the pointer moves beyond the boundary of the image, the controller 230 transmits the location information of the pointer to the display apparatus 100 so that the location information of the pointer can be transmitted to another image processing apparatus. Also, the controller 230 may transmit the resolution information of the image along with the location information of the pointer.

If the pointer 10 moves beyond the boundary of the image, a user's input from the input device 300 is selectively input to one between the image processing apparatus and another image processing apparatus connected to the input device 300 in accordance with the location of the pointer. In other words, a user's input can be transmitted from the input device 300 to only the image processing apparatus corresponding to the image where the pointer is currently located.

Thus, it is more convenient for a user to control the pointer to move among the images in the display apparatus through the input device 300 so that only a certain image processing apparatus receives the input signal.

Below, there will be described an operation of the controller 230 in the image processing apparatus corresponding to the image where the pointer will be moved and located.

If a pointer not currently located in the image corresponding to the video signal of the current image processing apparatus is moved in response to a user's input signal and reaches the boundary of the image corresponding to the video signal of the image processing apparatus, the controller 230 receives the location information of the pointer from the display apparatus 100. At this time, the controller 230 may further receive the resolution information of the image output from the another image processing apparatus, and may transform the location information of the pointer on the basis of the received image's resolution information and its output image's resolution information.

The controller 230 controls the pointer to be displayed starting from the boundary of the image corresponding to the video signal on the basis of the received pointer's location information or the pointer's location information transformed as above, and to move in response to a user's input.

Accordingly, there is an effect that the pointer 10 appears to move continuously when the pointer 10 displayed in the display apparatus 100 moves among the plurality of images corresponding to the video signals from the plurality of image processing apparatuses 200. This is the same even though the plural images are different in resolution.

As described above, there are provided a display apparatus that displays images from a plurality of image processing apparatuses and a control method of the same, which can maintain a continuity of movement of a pointer at a boundary between plural images.

Also, there is provided an image processing apparatus, which can keep continuity in movement of a pointer at a boundary between plural images displayed on a display apparatus, based on video signals provided from the plural image processing apparatuses.

Although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus comprising:
an image processor which processes a first video signal and a second video signal respectively received from a first image processing apparatus and a second image processing apparatus;
a display unit which displays a first image based on the first video signal and a second image based on the second video signal processed by the image processor; and
a controller which controls a display of a pointer to be included in one of the first image and the second image; and
controls location information of the pointer to be transmitted to one of the first image processing apparatus and the second image processing apparatus based on information of a movement of the pointer.

2. The display apparatus according to claim 1, wherein, the controller receives the location information from the first image processing apparatus and controls the location information to be transmitted to the second image processing apparatus or receives the location information from the second image processing apparatus and controls the location information to be transmitted to the first image processing apparatus.

3. The display apparatus according to claim 2, wherein, when the pointer is located in the first image, the controller controls resolution information about the first image to be transmitted to the second image processing apparatus and when the pointer is located in the second image, the controller controls resolution information about the second image to be transmitted to the first image processing apparatus.

4. The display apparatus according to claim 3, wherein the controller receives the resolution information about the first image from the first image processing apparatus and receives the resolution information about the second image from the second image processing apparatus.

5. The display apparatus according to claim 1, wherein the controller converts the location information of the pointer, on the basis of resolution information of the first and second images.

6. The display apparatus according to claim 1, wherein the controller transmits the location information of the pointer to one of the first image processing apparatus and the second image processing apparatus if the pointer moves between the first image and the second image.

7. The display apparatus according to any one of the preceding claims, further comprising a switching unit which receives the information on the movement of the pointer from an input signal of the input device and transmits the input signal to one of the first image processing apparatus and the second image processing apparatus,
wherein the controller controls the switching unit to switch the input signal between the first image processing apparatus and the second image processing apparatus if the pointer moves between the first image and the second image.

8. The display apparatus according to claim 1, wherein the input device comprises at least one of a wired mouse, a wireless mouse, a wired keyboard, a wireless keyboard, and a wireless pointing device.

9. A method of controlling a display apparatus, the method comprising:
simultaneously displaying a first image based on a first video signal received from a first image processing apparatus and a second image based on a second video signal received from a second image processing apparatus;
displaying a pointer based on location information of the pointer received from a single input device; and
transmitting location information of the pointer to one of the first image processing apparatus and the second image processing apparatus based on information of a movement of the pointer.

10. The method according to claim 9, wherein the transmitting the location information of the pointer comprises:
receiving the location information of the pointer from the first image processing apparatus and transmitting the location information received from the first image processing apparatus to the second image processing apparatus, or,
receiving the location information of the pointer from the second image processing apparatus and transmitting the location information received from the second image processing apparatus to the first image processing apparatus.

11. The method according to claim 10, wherein the transmitting the location information received from the first image processing apparatus to the second image processing apparatus further comprises transmitting resolution information about the first image to the second image processing apparatus, and
the transmitting the location information received from the second image processing apparatus to the first image processing apparatus further comprises transmitting resolution information about the second image to the first image processing apparatus.

12. The method according to claim 11, further comprising one of receiving the resolution information about the first image from one of the first image processing apparatus, and receiving the resolution information about the second image from the second image processing apparatus.

13. The method according to claim 10, wherein transmitting location information to the second image processing apparatus comprises converting the location information received from the first image processing apparatus on the basis of resolution information of the first and second images, and transmitting location information to the first image processing apparatus comprises converting the location information received from the second image processing apparatus on the basis of resolution information of the first and second images.

14. The method according to claim 10, wherein the transmitting the location information is performed if the pointer moves between the first image and the second image.

15. The method according to claim 14, further comprising receiving an input signal of the input device and transmitting the input signal to one of the first image processing apparatus and the second image processing apparatus.
